# EUROPEAN PATENT SPECIFICATION

(11) **EP 0 362 036 B1**
(45) Date of publication and mention of the grant of the patent: **22.11.1995**
(21) Application number: 89402610.3
(22) Date of filing: 22.09.1989
(51) Int. Cl.: D21G 9/00

(54) **System and process for detecting properties of travelling sheets in the cross direction**
System und Verfahren zur Detektion der Quereigenschaften einer sich bewegenden Bahn
Système et procédé pour la détection des propriétés transversales d'une bande en mouvement

(30) Priority: 26.09.1988 US 249617
(43) Date of publication of application: 04.04.1990
(73) Proprietor: MEASUREX CORPORATION, Cupertino California 95014-5991 (US)
(72) Inventor: Balakrishnan, Ramesh, Stanford California 94305 (US); Aral, Gurcan, Cupertino California 95014 (US)
(74) Representative: Poulin, Gérard

(56) References cited:
- EP-A- 0 041 486
- EP-A- 0 183 401
- EP-A- 0 276 106
- GB-A- 1 271 440
- TAPPI JOURNAL, vol. 71, no. 2, February 1988, pages 75-78, Norcross, GA, US; K. G. LANTZ et al.: "On-line measurement and control of strength properties"

## Description

### Field of the Invention

The present invention generally relates to sheetmaking systems and, more particularly, to sheetmaking control systems wherein measuring devices scan across travelling sheets during manufacture.

### State of the Art

It is well known to make on-line measurements of properties of sheet materials during manufacture. The purpose of on-line measurements, generally speaking, is to enable prompt control of sheetmaking processes and, thus, to enhance sheet quality while reducing the quantity of substandard sheet material which is produced before undesirable process conditions are corrected. In practice, most sheetmaking machines have been instrumented to include-on-line sensors. In the paper-making art, for instance, on-line sensors detect variables such as basis weight, moisture content, and caliper of sheets during manufacture.

On-line measurements during sheetmaking are, however, difficult to make accurately. One factor affecting on-line measurement is that many sheetmaking machines are large and operate at high speeds. For example, some paper-making machines produce sheets up to four hundred inches wide at rates of up to one hundred feet per second. Another factor affecting on-line measurements is that physical properties of sheet materials usually vary across the width of a sheet and may be different in the machine direction than in the cross direction. (In the sheetmaking art, the term "machine direction" refers to the direction of travel of a sheet during manufacture, and the term "cross direction" refers to the direction across the surface of a sheet perpendicular to the machine direction.)

To detect cross-directional variations in sheets, it is well known to use on-line scanning sensors that periodically traverse back and forth across a sheetmaking machine in the cross direction. Normally, measurement information provided by each scanning sensor is assembled to provide, for each scan, a "profile" of the detected property of the sheet. In other words, each profile is comprised of a succession of sheet measurements at adjacent locations extending generally in the cross direction. Based upon the profile measurements, variations are detected in sheet properties in the cross-direction and appropriate controls are adjusted with the goal of providing uniform cross-directional profiles, i.e., profiles that have constant amplitude in the cross direction.

In actual practice, although scanning sensors travel rapidly across sheetmaking machines in the cross direction, consecutive measurement points are not aligned exactly in the true cross direction; that is, the actual points at which scanning sensors provide measurements are not aligned exactly perpendicular to the edge of the sheet being measured. Instead, because of sheet velocity, scanning sensors actually move diagonally across the surface of a travelling sheet with the result that consecutive scanning paths follow a zig-zag pattern. Therefore, profiles based on sheet measurements taken by scanning sensors along the zig-zag paths include some machine-direction variations. As a result, when consecutive cross-directional profiles are compared or when one location on a profile is compared to another location, machine-direction variations can be confused with cross-directional variation. In the sheetmaking art, such confusion of machine-direction and cross-direction measurements is referred to as MD/CD coupling. As a result of MD/CD coupling, control systems that are intended to control cross-directional variations sometimes introduce artificial control disturbances which worsen, rather than improve, sheet uniformity in the cross direction.

Currently, sheetmaking control systems either do not compensate for MD/CD coupling or employ filters that average errors. Such filtering is not totally satisfactory for several reasons, including the fact that the filtering necessarily entails the loss of otherwise useful measurement information.

Document EP-A-0 183 401 discloses a process for controlling a parameter by repeatedly traversing a travelling sheet with a scanning sensor and taking data of the sheet regarding the parameter. The process includes sampling the data, repeatedly determining filtered data based upon two filter factors and controlling the parameter based upon the filtered data.

### SUMMARY OF THE INVENTION

Generally speaking, the present invention provides a method according to claim 1 to determine measurements such as basis weight and caliper of a travelling sheet during production. As a preliminary step, a sheet is repeatedly traversed with a scanning sensor and, during each traverse, measurements are taken at a plurality of slice locations. Next, a series of reference locations are selected which are spaced apart in the machine direction along the sheet surface and then, for selected slices. In the preferred embodiment, generally linear relationships are determined between at least two measurements actually made on each slice, and then measurement values are estimated based on the linear relationships by interpolation and extrapolation.

Further preferred embodiments of the invention are claimed in claims 2 to 15.

### BRIEF DESCRIPTION OF THE DRAWINGS

FIGURE 1 is a generally schematic view of a sheetmaking machine ;
FIGURE 2A shows an example of a path that a scanning sensor follows over a moving sheet ;
FIGURE 2B is a graph that shows measured and estimated values of sheet properties for the scanning path of FIGURE 2A ;
FIGURE 3 is a graph that shows actual values of a sheet property together with measured values along a particular slice of the sheet ;
FIGURE 4 is a graph which corresponds to FIGURE 3 and which shows errors between actual and measured values of sheet properties.

### DETAILED DESCRIPTION OF THE PREFERRED EMBODIMENTS

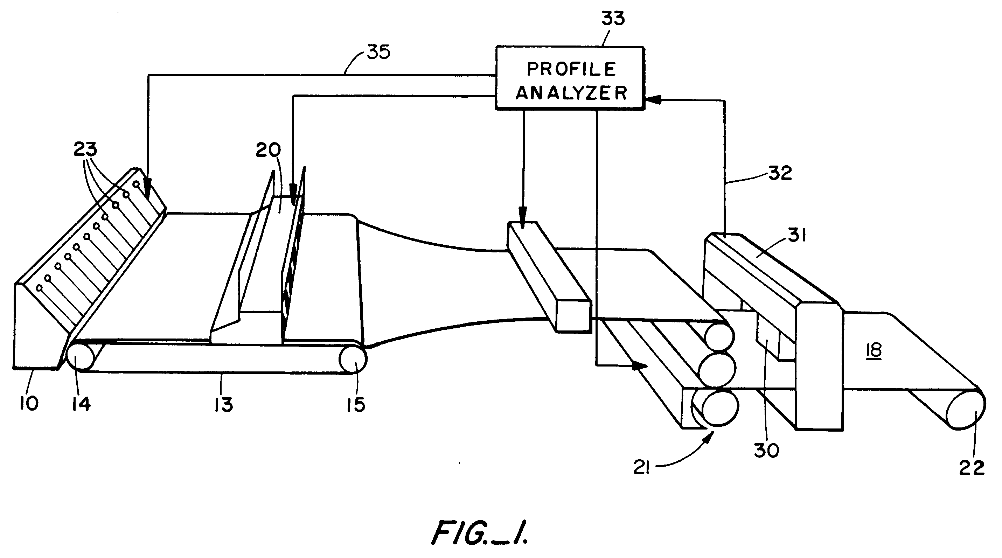

FIGURE 1 generally shows a typical sheetmaking machine for producing continuous sheet material such as paper or plastic. In the illustrated embodiment, the sheetmaking machine includes a feed box 10 mounted to discharge raw material onto a supporting web 13 trained between rollers 14 and 15. The sheetmaking machine also includes processing stages, such as a steambox 20 and a calendaring device 21, which operate upon the raw material to produce a finished sheet 18 which is collected by a reel 22.

It should be understood that such processing stages each include devices, called profile actuators, that control properties across sheet 18. In practice, the profile actuators provide generally independent adjustment at adjacent cross-directional locations, normally referred to as "slices". For instance, steam box 20 can be understood to include actuators that control the quantity of steam applied to sheet 18 at various slice locations. Also, calendaring stage 21 can be understood to include actuators for controlling the pressure applied to sheet 18 at various slice locations.

To provide control information for the profile actuators, at least one scanning sensor 30 is provided on the sheetmaking machine to measure a selected sheet property such as, for example, caliper or basis weight in the case of papermaking. In the illustrated embodiment, scanning sensor 30 is mounted on a supporting frame 31 to be driven to periodically traverse the sheetmaking machine in the cross direction. Normally, the scanning sensor moves periodically across the sheetmaking machine, but the scanning period can be somewhat irregular in practice. Further, scanning sensor 30 is connected, as by line 32, to a profile analyzer 33 to provide the analyzer with signals indicative of the measured sheet property. From profile analyzer 33, control signals are provided to the profile actuators at one or more of the processing stages; for example, line 35 carries control signals from profile analyzer 33 to profile actuators 23 on feedbox 10.

Because of the velocity of sheet 18, scanning sensor 30 does not measure the selected sheet property at locations which are aligned across the surface of sheet 18 exactly perpendicular to the longitudinal edge of the sheet (i.e., in the true cross-directional). Instead, as mentioned above, the actual cross-directional measurement locations are located along paths on the sheet surface which are skewed, or biased, with respect to the direction exactly perpendicular to the sheet edge.

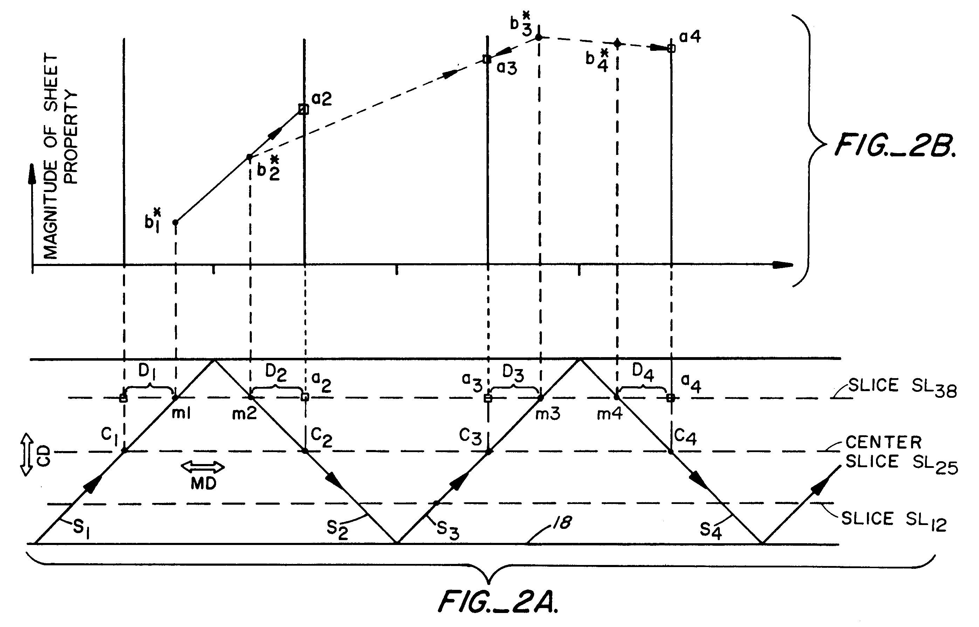

FIGURE 2A shows an example of the pattern of cross-directional measurement points across the surface of sheet 18. More particularly, the zig-zagging solid line in FIGURE 2A shows the actual pattern of measurement points that would be traced by scanning sensor 30 on the surface of sheet 18 for back-and-forth consecutive scanning paths S₁, S₂, S₃, and so forth as sheet 18 travels in the machine direction (MD). It may be appreciated that the angle of each of the actual scanning paths relative to the true cross-direction (CD) depends upon the cross-directional velocity of scanning sensor 30 and upon the machine-direction velocity of sheet 18. (The angle of each of the scanning paths across sheet 18 also depends upon the orientation of frame 31 relative to the sheetmaking machine; in practice, however, the frame orientation is not variable during normal sheetmaking operations.) In the ideal case, cross-directional measurements would be made instantaneously across the sheet and the scanning paths would be parallel lines in the true cross-direction (i.e., exactly perpendicular to the sheet edge). In practice, however, actual scanning paths have the zig-zag pattern shown in FIGURE 2A and, moreover, there are occasional lags between the time a sensor reaches an edge of a sheet and the time at which the return scan begins.

For purposes of explanation, sheet 18 in FIGURE 2A is shown as divided into a series of longitudinally-extending parallel strips, referred to above as slices. It can be assumed that slice SL₂₅ is midway between the edges of the sheet, that slice SL₃₈ is close to the far edge of sheet 18, and that SL₁₂ is close to the near edge. The points c₁, c₂, c₃ and so forth along center slice SL₂₅ indicate, for purposes of this example, the points at which measurements are taken by scanning sensor 30 as it regularly traverses back and forth sheet 18 at generally constant speed. The points m₁, m₂, m₃ and so forth indicate points at which measurements are taken by scanning sensor 30 as it traverses across slice SL₃₈ Further in the example shown in FIGURE 2A, there are time lags between the time the scanning sensor reaches the edge of sheet 18 and the time the return scans begin.

As is evident from FIGURE 2A, the measurement points c₁, c₂ and so forth along center slice SL₂₅ are evenly spaced in the machine direction, but measurements points m₁, m₂ and so forth along off-center slice SL₃₈ are not evenly spaced. The same is true of all other off-center slices. Thus, measurements along off-center slices are either taken before, or after, measurementss taken along the center slice. In FIGURE 2A, the longitudinal spacing between measurement points m₁ and c₁ is represented by distance D₁, the longitudinal spacing between measurement points m₂ and c₂ is represented by distance D₂, and so forth. When scanning sensor 30 traverses a sheet at constant speed in both directions without lags at the sheet edges, D₁ = D₂ = D₃ and so forth.

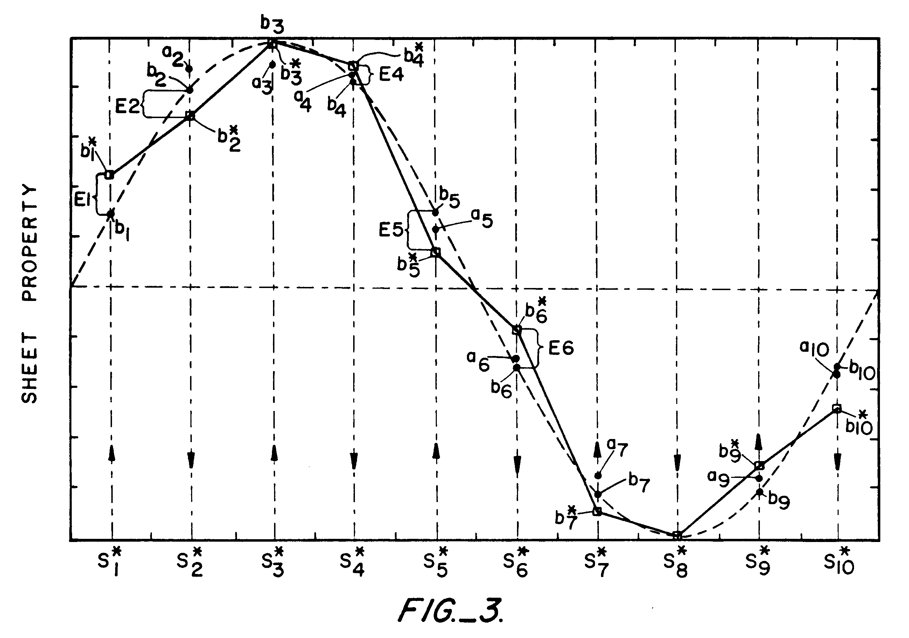

FIGURE 3 is the graph of the magnitude of a measurable sheet property, such as basis weight, at various locations along the length of sheet 18 for an off-center slice, say slice SL₃₈ (That is, the vertical axis in FIGURE 3 represents the magnitude of a measurable sheet property and the horizontal axis represents positions along the sheet in the machine direction.) In the graph of FIGURE 3, the length of sheet 18 is divided by regularly spaced parallel lines S_{1*}, S_{2*}, and so forth. Those parallel lines indicate the locus of true, or instantaneous, cross-directional scans, each of which extends exactly perpendicular to the edge of sheet 18. In terms of FIGURE 2A, the parallel lines S_{1*}, S_{2*} and so forth in FIGURE 3 can be understood to correspond to the machine-directional locations at which respective measurement points C₁, C₂, C₃ and so forth are located.

For purposes of discussion of FIGURE 3, it should be assumed that there is a measurable sheet property whose magnitude is indicated by the dashed curve and that this sheet property varies sinusoidally in the machine direction but is constant in the cross-direction. In other words, it should be assumed that, at any slice, the measured sheet property would be represented by the same curve relative to scans S_{1*}, S_{2*}, and so forth. In still other words, it should be assumed that the cross-directional profiles for the given sheet property are constant from slice to slice.

In FIGURE 3, the points labelled b₁, b₂, and so forth indicate particular values of the measured sheet property for respective scans S_{1*}, S_{2*}, S_{3*} and so forth. (That is, a downwardly directed arrow in FIGURE 3 indicates that the scanning direction is toward the near edge of sheet 18 and an upwardly directed arrow indicates that the scanning direction is toward the far edge of the sheet.) Points b_{1*}, b_{2*}, b_{3*} and so forth in FIGURE 3 indicate the magnitude of actual measurements obtained on an off-center slice such as slice SL₃₈ by scanning sensor 30 during scans corresponding to S_{1*}, S_{2*} and so forth. Since scanning sensor 30 does not actually take measurements at slice SL₃₈ until either before, or after, taking measurements at center slice SL₂₅ the measurements b_{1*}, b_{2*}, and so forth are displaced in the machine direction either before, or after, the true cross-directional location of associated points b₁, b₂, and so forth. Furthermore, because of the displacements, the magnitude of each of the actually measured values b_{1*}, b_{2*}, and so forth differs from each of the corresponding values b₁, b₂ and so forth which would be obtained for true cross-directional scans. (For convenience in viewing FIGURE 3, solid lines connect the measurement point b1*, b2* and so forth.)

Further in FIGURE 3, the difference, or error, between the magnitude of the value b₁ for scan S₁ and the actually measured value b_{1*} is indicated as E₁. Likewise, the error between the magnitude of the value b₂ and the actually measured value b_{2*} for scan S₂ is indicated as E₂, and so forth.

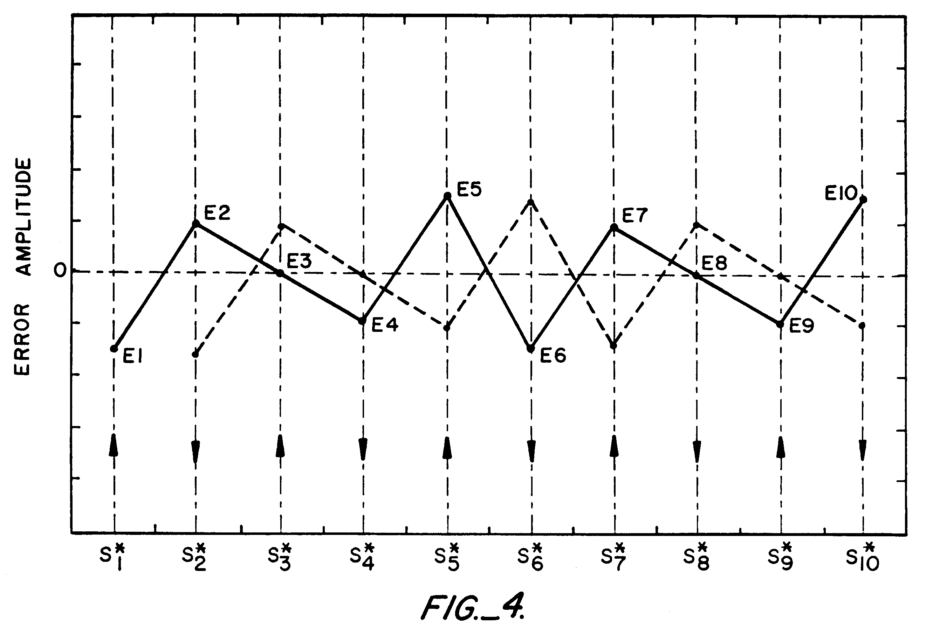

FIGURE 4 shows the magnitude of the errors E₁, E₂ and so forth for slice SL₃₈ in FIGURE 3 plotted as a function of scan location. The dashed line in FIGURE 4 indicates errors between measured and actual sheet properties for some other slice location. Thus, FIGURE 4 illustrates that measurement errors can vary from slice to slice even when cross-directional profiles are constant between slices. In practice, the phase shift between measurement errors is not necessarily regular as shown in FIGURE 3. In fact, measurement errors can vary both in magnitude and in frequency. In some cases, the measurement errors vary more slowly than actual machine-directional variations and, therefore, the measurement errors cannot be eliminated by frequency filtering. Moreover, averaging errors from profile to profile in such cases does not necessarily reduce the effect of the errors.

There will now be described a method for minimizing errors in profile measurements compiled while scanning sensor 30 traverses across sheet 18. More particularly, a method will be described wherein profile measurement errors are minimized by estimating measurements which would be made at regularly spaced intervals for ideal (i.e., instantaneous) scans in the cross direction. In practice, such alignments are usually made in relation to measurements taken along the center slice of a sheet, since those measurements are normally spaced regularly in the machine direction.

FIGURE 2B illustrates one example of a procedure for aligning cross-directional measurements from an off-center slice, such as, SL₃₈, with corresponding measurements taken at the center slice SL₂₅ In FIGURE 2B, values along the vertical axis represent the magnitude of a measured sheet property and values along the horizontal axis represent the machine-directional location along sheet 18 at which the measurements are taken. In this examplary procedure, the values b_{1*} and b_{2*} of measurements taken at locations m₁ and m₂ are extrapolated linearly by extending a straight line between values b_{1*} and b_{2*} to arrive at an estimated value a₂ that approximates (i.e., estimates) the value of a measurement that would be obtained along slice SL₃₈ at the machine directional location of measurement point c₂. The estimated magnitude of measurement a₂ can be called an "aligned" value, since it represents the value of an estimated measurement at a point which is aligned in the true cross direction with the machine-directional location of center-slice measurement point c₂.

Similarly, to determine an aligned measurement a₃ for scan S₃, the values b_{2*} and b_{3*} of measurements taken at locations m₂ and m₃ are linearly interpolated by extending a straight line between values b_{2*} and b_{3*}. The intersection of the interpolation line with the machine-directional coordinate for scan S₃ at center-slice measurement point c3 is determined and assigned value a₃.

The above-described procedure can also be carried out in terms of the values shown in FIGURE 3. Thus, in FIGURE 3, it can be observed that estimated measurements a₂, a₃, a₄ and so forth generally lie much closer to the true sheet profile values b₂, b₃ and so forth than actual measured values b_{2*}, b_{3*} and so forth. Thus, the above-described alignment method substantially increases the accuracy of cross-directional profiles.

In practice, estimated values for profile measurements are calculated for each slice by a microprocessor-based control system. In operation of the systems, the machine-directional coordinate for each aligned point is determined based upon the speed at which a sheet is travelling and the speed at which a scanning sensor traverses the sheet. Values for the speed of a sheet and scanning sensor can be readily determined by conventional speed sensors.

While the present invention has been illustrated and described in accordance with a preferred embodiment, it should be recognized that variations and changes may be made therein without departing from the invention as set forth in the following claims. For example, the preceding discussion focused upon the use of two actual measurement values for calculating each estimated value; however, three or more measurement values can be used as a basis for estimating profile values. Also, although linear extrapolations and interpolations are the most convenient to make, estimated values can also be calculated based upon non-linear estimation functions.

## Claims

1. A method for determining measurements of a property of travelling sheet materials during production by repeatedly traversing a travelling sheet (18) with a scanning sensor (30) and, during each traverse, taking measurements (m₁, m₂, m₃, m₄) of a property of the sheet (18) at a plurality of slice locations (SL₁₂, SL₂₅, SL₃₈), said method being, characterized in that, it comprises the steps of :
selecting a series of reference locations (C₁, C₂, C₃, C₄) corresponding to measurements taken along a selected slice (SL₂₅) which are spaced apart in the machine direction (MD) along the sheet surface (18) ;
then, for selected slices (SL₃₈), estimating measurement values (a₂, a₃, a₄) on the same cross directional line as the reference location (C₂, C₃, C₄) based upon actual measurements (m₁, m₂, m₃, m₄) taken during consecutive traverses of the selected slices (SL₃₈), the actual measurements (m₁, m₂, m₃, m₄) on the selected slices (SL₃₈) not being spaced in the machine direction (MD) at the same spacing as the reference locations (C₁, C₂, C₃, C₄).

2. The method of claim 1, wherein said estimating step includes estimating a measurement (a₂, a₃) for a selected slice (SL₃₈) based upon actual measurements (m₁, m₂, m₃) at the slice (SL₃₈) taken during two traverses of the slice (SL₃₈).

3. The method of claim 2, wherein said measurements (m₁, m₂) taken during consecutive traverses are linearly extrapolated to determine estimated measurements (a₂).

4. The method of claim 2, wherein said measurements (m₂, m₃) taken during consecutive traverses are linearly interpolated to determine the actual measurement (a₃).

5. The method of claim 1, wherein the reference locations (C₁, C₂, C₃, C₄) are regularly spaced apart.

6. The method of claim 1, wherein the estimating step includes :
for each of the selected slices (SL₃₈), determining a generally linear relationship between at least two measurements (m₁, m₂) or (m₂, m₃) actually made on the slice (SL₃₈) ; and
estimating a measurement value (a₂ or a₃) based on said generally linear relationship for a selected reference location (C₂ or C₃).

7. The method of claim 1, wherein the measured property (m₁, m₂, m₃, m₄) is the basis weight of the sheet (18).

8. The method of claim 1, wherein the measured property (m₁, m₂, m₃, m₄) is the moisture content of the sheet (18).

9. The method of claim 1, wherein the measured property (m₁, m₂, m₃, m₄) is the caliper of the sheet (18).

10. The method of claim 1, wherein the sheet (18) is paper.

11. The method of claim 1, wherein the sheet (18) is plastic.

12. The method of any of claims 1 and 7 through 11 wherein :
for each traverse the reference machine-direction locations (C₁, C₂, C₃, C₄) are generally regularly spaced relative to precedingly-selected machine-directional locations ;
the estimated measured values (a₂, a₃, a₄) of the sheet property at the selected slices (SL₃₈) are based upon measurements (m₁, m₂, m₃, m₄) actually taken at the slices (SL₃₈) at locations which are generally regularly spaced in the machine-direction.

13. The method of claim 12, wherein the estimating step includes :
for each of the selected slices (SL₃₈), determining a generally linear relationship between at least two measurements (m₁, m₂, m₃, m₄) actually made on the slice (SL₃₈) ; and
estimating a measurement value (a₂, a₃, a₄) based on said generally linear relationship for a selected reference location (SL₃₈).

14. The method of claim 6, wherein measurements (m₁, m₂) taken during back and forth consecutive traverses are linearly extrapolated to determine estimated measurements (a₂).

15. The method of claim 6, also including the step of linearly interpolating measurements (m₂, m₃) taken during consecutive traverses to determine the estimated measurement (a₃).

## Patentansprüche

1. Verfahren zum Vornehmen von Messungen einer Eigenschaft von sich bewegenden Bahnmaterialien bei der Produktion, indem eine sich bewegende Bahn (18) mit einem Abtastsensor (30) wiederholt überstriffen wird und indem bei jeder Überstreifung Messungen (m₁, m₂, m₃, m₄) einer Eigenschaft der Bahn (18) an einer Vielzahl von Streifenorten (SL₁₂, SL₂₅, SL₃₈) vorgenommen werden, wobei das Verfahren dadurch gekennzeichnet ist, daß es die Schritte aufweist:
das Auswählen einer Reihe von Referenzorten (C₁, C₂, C₃, C₄), die Messungen, die entlang eines ausgewählten Streifens (SL₂₅) vorgenommen werden, entsprechen und in Bearbeitungsrichtung (MD) entlang der Bahnoberfläche (18) beabstandet sind,
dann für ausgewählten Streifen (SL₃₈) das Schätzen der Meßwerte (a₂, a₃, a₄) an der gleichen Querrichtungslinie wie der Referenzort (C₂, C₃, C₄) auf den Ist-Wert-Messungen (m₁, m₂, m₃, m₄), die während der aufeinanderfolgenden Überstreifungen der ausgewählten Streifen (SL₃₈) vorgenommen werden, basierend, wobei die Ist-Wert-Messungen (m₁, m₂, m₃, m₄) an den ausgewählten Streifen (SL₃₈) in Bearbeitungsrichtung (MD) nicht mit dem gleichen Abstand wie die Referenzorte (C₁, C₂, C₃, C₄) beabstandet sind.

2. Verfahren nach Anspruch 1, bei dem der Schätzschritt das Schätzen einer Messung (a₂, a₃) für einen ausgewählten Streifen (SL₃₈) auf den Ist-Wert-Messungen (m₁, m₂, m₃) am Streifen (SL₃₈), die während zwei Überstreifungen des Streifens (SL₃₈) vorgenommen werden, basierend beinhaltet.

3. Verfahren nach Anspruch 2, bei dem die Messungen (m₁, m₂), die während aufeinanderfolgender Überstreifungen vorgenommen werden, linear extrapoliert werden, um die geschätzten Messungen (a₂) zu bestimmen.

4. Verfahren nach Anspruch 2, bei dem die Messungen (m₂, m₃), die während aufeinanderfolgender Überstreifungen vorgenommen werden, linear interpoliert werden, um die Ist-Wert-Messung (a₃) zu bestimmen.

5. Verfahren nach Anspruch 1, bei dem die Referenzorte (C₁, C₂, C₃, C₄) regelmäßig beabstandet sind.

6. Verfahren nach Anspruch 1, bei dem der Schätzschritt aufweist:
das Bestimmen einer im wesentlichen linearen Beziehung zwischen zumindest zwei Messungen (m₁, m₂) oder (m₂, m₃), die zur Zeit am Streifen (SL₃₈) vorgenommen werden, für jeden der ausgewählten Streifen (SL₃₈), und
das Schätzen einer Meßwertes (a₂ oder a₃) auf der im wesentlichen linearen Beziehung basierend für einen ausgewählten Referenzort (C₂ oder C₃).

7. Verfahren nach Anspruch 1, bei dem die gemessene Eigenschaft (m₁, m₂, m₃, m₄) das Grundgewicht der Bahn (18) ist.

8. Verfahren nach Anspruch 8, bei dem die gemessene Eigenschaft (m₁, m₂, m₃, m₄) der Feuchtegehalt der Bahn (18) ist.

9. Verfahren nach Anspruch 1, bei dem die gemessene Eigenschaft (m₁, m₂, m₃, m₄) die Dicke der Bahn (18) ist.

10. Verfahren nach Anspruch 1, bei dem die Bahn (18) Papier ist.

11. Verfahren nach Anspruch 1, bei dem die Bahn (18) Plastik ist.

12. Verfahren nach einem der Ansprüche 1 und 7 bis 11, bei dem
für jede Überstreifung die Referenzorte (C₁, C₂, C₃, C₄) in Bearbeitungsrichtung in bezug auf die zuvor ausgewählten Orte in Bearbeitungsrichtung im wesentlichen regelmäßig beabstandet sind,
die geschätzten Meßwerte (a₂, a₃, a₄) der Bahneigenschaft der ausgewählten Streifen (SL₃₈) auf Messungen (m₁, m₂, m₃, m₄) basieren, die zur Zeit an den Streifen (SL₃₈) an Orten vorgenommen werden, die in Bearbeitungsrichtung im wesentlichen regelmäßig beabstandet sind.

13. Verfahren nach Anspruch 12, bei dem der Schätzschritt beinhaltet:
das Bestimmen einer im wesentlichen linearen Beziehung zwischen zumindest zwei Messungen (m₁, m₂, m₃, m₄), die an dem Streifen (SL₃₈) zur Zeit vorgenommen werden, für jeden der ausgewählten Streifen (SL₃₈) und
das Schätzen eines Meßwertes (a₂, a₃, a₄) auf der im wesentlichen linearen Beziehung basierend für einen ausgewählten Referenzort (SL₃₈).

14. Verfahren nach Anspruch 6, bei dem Messungen (m₁, m₂), die während der aufeinanderfolgenden Hin- und Zurück-Überstreifungen vorgenommen werden, linear extrapoliert werden, um die geschätzten Messungen (a₂) zu bestimmen.

15. Verfahren nach Anspruch 6, das ebenfalls den Schritt der linearen Interpolation von Messungen (m₂, m₃) beinhaltet, die während der aufeinanderfolgenden Überstreifungen vorgenommen werden, um die geschätzte Messung (a₃) zu bestimmen.

## Revendications

1. Procédé pour la détermination de mesures d'une propriété de matériaux en feuille en mouvement pendant la production en balayant de façon répétée une feuille en mouvement (18) avec un capteur d'exploration (30) et en effectuant, pendant chaque balayage, des mesures (m₁, m₂, m₃, m₄) d'une propriété de la feuille (18) en plusieurs emplacements de tranches (SL₁₂, SL₂₅, SL₃₈), ledit procédé étant caractérisé en ce qu'il comporte les phases suivantes :
sélection d'une série d'emplacements de référence (C₁, C₂, C₃, C₄) correspondant aux mesures effectuées le long d'une tranche sélectionnée (SL₂₅) et espacés l'un de l'autre dans le sens de la machine (MD) le long de la surface de la feuille (18) ;
puis, pour des tranches sélectionnées (SL₃₈), estimation de valeurs des mesures (a₂, a₃, a₄) sur la même ligne directionnelle que l'emplacement de référence (C₂, C₃, C₄), basée sur des mesures réelles (m₁, m₂, m₃, m₄) effectuées pendant des balayages consécutifs des tranches sélectionnées (SL₃₈), les mesures réelles (m₁, m₂, m₃, m₄) sur les tranches sélectionnées n'étant pas espacées dans le sens de la machine (MD) avec le même espacement que les emplacements de référence (C₁, C₂, C₃, C₄).

2. Procédé selon la revendication 1, dans lequel ladite phase d'estimation comprend l'estimation d'une mesure (a₂, a₃) pour une tranche sélectionnée (SL₃₈) basée sur des mesures réelles (m₁, m₂, m₃) dans la tranche (SL₃₈) effectuées pendant deux balayages de la tranche (SL₃₈).

3. Procédé selon la revendication 2, dans lequel lesdites mesures (m₁, m₂) effectuées pendant des balayages consécutifs sont extrapolées linéairement pour déterminer des mesures estimées (a₂).

4. Procédé selon la revendication 2, dans lequel lesdites mesures (m₂, m₃) effectuées pendant des balayages consécutifs sont interpolées linéairement pour déterminer la mesure réelle (a₃).

5. Procédé selon la revendication 1, dans lequel les emplacements de référence (C₁, C₂, C₃, C₄) sont espacés régulièrement.

6. Procédé selon la revendication 1, dans lequel la phase d'estimation comprend :
pour chacune des tranches sélectionnées (SL₃₈), détermination d'une relation généralement linéaire entre au moins deux mesures (m₁, m₂) ou (m₂, m₃) réellement effectuées sur la tranche (SL₃₈); et
estimation d'une valeur de mesure (a₂ ou a₃) basée sur ladite relation généralement linéaire pour un emplacement de référence sélectionné (C₂ ou C₃).

7. Procédé selon la revendication 1, dans lequel la propriété mesurée (m₁, m₂, m₃, m₄) est le poids brut de la feuille (18).

8. Procédé selon la revendication 1, dans lequel la propriété mesurée (m₁, m₂, m₃, m₄) est la teneur en eau de la feuille (18).

9. Procédé selon la revendication 1, dans lequel la propriété mesurée (m₁, m₂, m₃, m₄) est l'épaisseur de la feuille (18).

10. Procédé selon la revendication 1, dans lequel la feuille (18) est en papier.

11. Procédé selon la revendication 1, dans lequel la feuille (18) est en plastique.

12. Procédé selon l'une des revendications 1 et 7 à 11, dans lequel :
pour chaque balayage, les emplacements de référence dans le sens de la machine (C₁, C₂, C₃, C₄) sont en général régulièrement espacés par rapport aux emplacements dans le sens de la machine sélectionnés précédemment;
les valeurs mesurées estimées (a₂, a₃, a₄) de la propriété de la feuille dans les tranches sélectionnées (SL₃₈) sont basées sur des mesures (m₁, m₂, m₃, m₄) réellement effectuées dans les tranches (SL₃₈) à des emplacements qui sont en général régulièrement espacés dans le sens de la machine.

13. Procédé selon la revendication 12, dans lequel la phase d'estimation comprend :
pour chacune des tranches sélectionnées (SL₃₈), détermination d'une relation généralement linéaire entre au moins deux mesures (m₁, m₂, m₃, m₄) réellement effectuées dans la tranche (SL₃₈) ; et
estimation d'une valeur de mesure (a₂, a₃, a₄) basée sur ladite relation généralement linéaire pour un emplacement de référence sélectionné (SL₃₈).

14. Procédé selon la revendication 6, dans lequel des mesures (m₁, m₂) effectuées pendant des balayages aller et retour consécutifs sont extrapolées linéairement pour déterminer les mesures estimées (a₂).

15. Procédé selon la revendication 6, comprenant également la phase d'interpolation linéaire des mesures (m₂, m₃) effectuées pendant des balayages consécutifs pour déterminer la mesure estimée (a₃).
